# EUROPEAN PATENT SPECIFICATION

(11) **EP 2 138 046 B1**
(45) Date of publication and mention of the grant of the patent: **17.08.2016**
(21) Application number: 09163540.9
(22) Date of filing: 24.06.2009
(51) Int. Cl.: A21C 3/02, A21C 7/00, A21C 9/08

(54) **Machine and method for working dough**
Maschine und Verfahren zur Bearbeitung von Teig
Machine et procédé pour travailler la pâte

(30) Priority: 26.06.2008 IT UD20080150
(43) Date of publication of application: 30.12.2009
(73) Proprietor: Prismafood SRL, 33098 Valvasone (IT)
(72) Inventor: Dus, Sergio, 33072, Casarsa della Delizia (PN) (IT)
(74) Representative: Petraz, Gilberto Luigi

(56) References cited:
- EP-A1- 1 433 381
- EP-A2- 1 082 903
- DE-A1- 19 605 238
- GB-A- 1 472 177
- GB-A- 2 401 935
- US-A- 4 255 106
- US-A- 4 403 937
- US-A- 5 935 629

## Description

### FIELD OF THE INVENTION

The present invention concerns a machine and the relative method for working dough, used for working doughs for the production of oven products, such as doughs for bread-making, for pizza, pasta and suchlike.

### BACKGROUND OF THE INVENTION

Machines are known for making and at least partly flattening doughs or pizza balls.

These known machines have a work chamber in which pairs of work rollers are provided, driven by a motor member, in order to flatten the balls.

The work rollers are normally associated with transmission means, which comprise reduction members associated directly with the rotation shaft of each roller, an example of which is shown in IT-UD2005A000180.

In the known solutions, the balls are fed in sequence into the work chamber through a feed chute disposed upstream and in cooperation with first work rollers.

In order to reduce energy consumption, it is known to keep the rollers normally stationary, activating them manually when each ball is loaded, by means of a switch.

However, costs are high and an excellent repeatability of the operations is not always guaranteed.

Furthermore, this entails the use of an operator, who must always keep his attention on the operations of the machine, to switch it on and off, preventing him from carrying out other activities while the machine is working.

There is a growing need to automate as much as possible the operations of flattening and working the balls, reducing energy consumption to a minimum.

In general it is known to provide optical, mechanical or other type of sensors, with direct detection through mechanical or visual contact, which activate or stop the activity of operating machines.

In the specific field of the machine of the invention, the optical or mechanical sensors should be disposed inside the work chamber, and therefore in contact with oils, flour, water or other food substances present.

Therefore, the optical or mechanical sensors of a known type are not suitable, since they are frequently dirtied by said substances to the extent that the correct functioning is limited or impeded.

This solution would require frequent operations of extraordinary maintenance on the sensors, entailing additional costs and frequent interruptions to production.

US-A-4.255.106 discloses a machine for working dough according to the preamble of claim 1 and a method for working dough according to the preamble of claim 8.

Purpose of the present invention is to achieve a machine for working a dough for the production of oven products, such as doughs for bread-making, pizza, pasta and suchlike, which overcomes the disadvantages of the state of the art.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purpose, the present invention provides a machine for working and flattening a dough that comprises at least a work chamber in which at least a pair of rollers is provided, motorized by means of relative motor members, and disposed substantially parallelly adjacent, so as to define between them an aperture, into which the dough is fed.

According to a variant, the size of the aperture that determines the thickness of the dough exiting from the rollers is variable as desired.

The machine according to the invention also comprises a feed member disposed at least partly inside the work chamber, upstream of the pair of rollers, and able to feed the dough in cooperation with the rollers.

According to the invention, the machine also comprises proximity transducer means with indirect detection, for example of the capacitive, inductive, magnetic or pressure type or suchlike, disposed outside the work chamber, in a protected position and in cooperation with the feed member, so as to detect indirectly the presence or passage of the dough in correspondence with the feed member.

By indirect detection of the dough we mean a detection made from an ambient at least partly distinct, separate and protected with respect to the one where the dough is, that is, without direct mechanical or visual contact with the dough. The indirect detection can be carried out, for example, by means of a detection of the variation in an electric or electromagnetic field, of a capacity, pressure, temperature, humidity or other, transforming said variation into a corresponding electric signal.

The transducer means are electronically connected to the motor members of the rollers so that, once the presence or passage of the dough has been detected in correspondence with the feed member, the motor members, and therefore the rollers, are commanded to be activated, in order to work the dough.

In this way, the rollers are activated in a completely automated manner, only for the period needed for working the dough, or for a desired waiting time for the next dough; when this time has passed, the machine is stopped, and is automatically reactivated as soon as the presence of a new dough is detected.

The capacity of detecting indirectly the presence or passage of dough allows to keep the transducer means in a zone protected from dust, flour, water and oil which are present inside the work chamber.

With the present invention it is thus possible to keep the transducer means constantly in the best operating conditions, reducing to a minimum any possible extraordinary maintenance with its consequent interruptions to operations

Advantageously, the motor members are kept active for long enough to completely work the dough.

According to another variant, the duration of the activation is regulated by a timer member.

According to another variant, the duration of the activation is regulated by a second transducer member disposed at exit from the rollers, and able to detect the end of the working of the dough, so as to be able to de-activate the rollers.

According to a variant, the transducer means comprise at least a sensor attached to the feed member and able to detect indirectly the presence or passage of the dough, and a control unit, connected to the sensor and the motor members and able to command, according to the signal detected by the sensor, the drive of the motor members.

According to another variant, the motor member comprises a motor and a reducer member directly connected to the outlet of the motor.

According to another variant, the sensor means are associated with counter means able to perform an incremental counting of the doughs worked. The counting function can be used, for example, to display on a display device the overall number of doughs produced in a determinate period of time, so as to make production statistics, or for any other reason connected to the counting of the doughs.

### BRIEF DESCRIPTION OF THE DRAWINGS

These and other characteristics of the present invention will become apparent from the following description of a preferential form of embodiment, given as a non-restrictive example with reference to the attached drawings wherein:

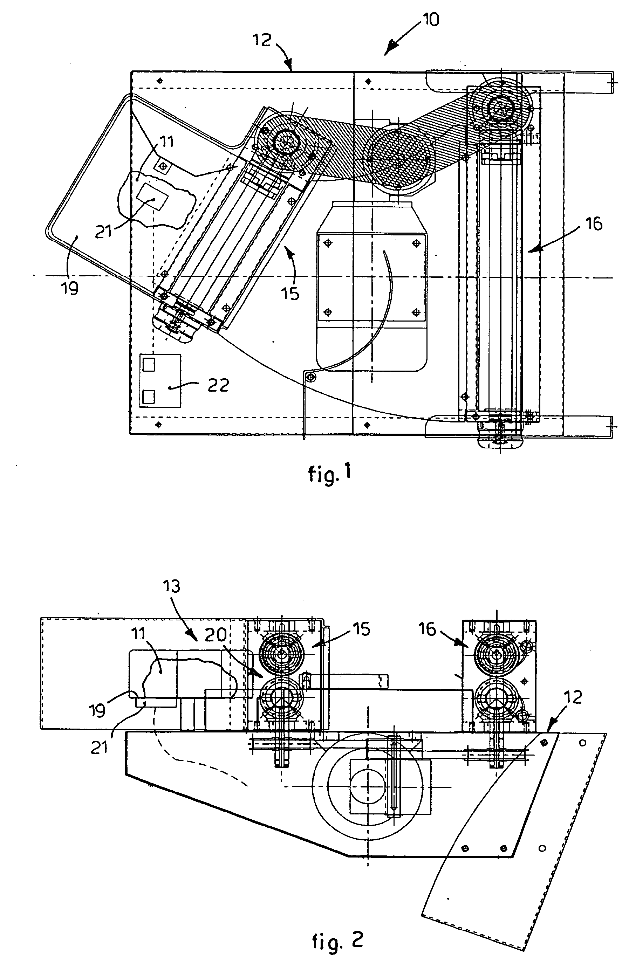

- fig. 1 is a lateral view of a machine for working a dough according to the present invention;
- fig. 2 is a view from above of the machine in fig. 1.

### DETAILED DESCRIPTION OF A PREFERENTIAL FORM OF

### EMBODIMENT

With reference to the attached drawings, a machine 10 according to the present invention is applied for working and flattening dough 11, for the production of oven products such as bread, pizza, pasta or others.

The machine 10 according to the present invention comprises a frame 12 defining inside it a work chamber 13, inside which, in this case, two pairs of rollers 15 and 16 are provided, motorized by a single motor member.

The machine 10 also comprises a loading chute 19 disposed at least partly in the work chamber 13 and upstream of the first pair of rollers 15 and 16. Through the loading chute 19 the doughs 11 are progressively fed toward the first pair of rollers 15 and 16, in order to work them.

The loading chute 19 is disposed in an inclined position with respect to a horizontal plane, so as to exploit gravity to facilitate the feed of the dough 11 to the first pair of rollers 15 and 16.

The rollers 15 and 16 are advantageously made of plastic material, such as polyethylene, or metal material, of the type for food.

Furthermore, the rollers 15 and 16 are counter-rotating, so as to draw the dough 11 downward as it is fed through the loading chute 19, and to flatten it by obliging it to pass through an aperture 20 defined between the adjacent rollers 15 and 16.

The aperture 20 advantageously has a selectively adjustable width, in a substantially known manner, for example by means of a cam mechanism.

The machine 10 also comprises at least a proximity transducer, for example a capacitive sensor 21, attached on a lower surface of the loading chute 19, opposite the surface on which the dough 11 slides, with respect to the chute 19.

In this way, the capacitive sensor 21 is in a separate and distinct zone from the work chamber 13.

The capacitive sensor 21 is able to detect the presence or passage of the dough 11 on the loading chute 19, calculating the variation in electric capacity as the dough 11 passes.

The capacitive sensor 21 is connected to a control unit 22, which is in turn connected to the motor member.

The control unit 22 is the programmed or programmable type and, according to the presence signal detected by the capacitive sensor 21, is able to selectively command the activation of the motor member so as to activate the rotation of the two pairs of rollers 15 and 16.

In this way, the rotation of the two rollers 15 and 16 is only activated when the dough 11 is present on the loading chute 19.

According to a variant, not shown, the two pairs of rollers 15 and 16 are deactivated by means of a timer, which after a determinate period interrupts the functioning of the motor member until a new dough 11 is fed through the loading chute 19.

According to another variant, another capacitive sensor, or another type, is provided at exit from the second pair of rollers 15 and 16, which as soon as it detects that the working of the dough 11 has been completed, commands the motor member to stop.

According to another variant, the machine 10 comprises a single pair of rollers 15 and 16.

It is clear, however, that modifications and/or additions of parts or steps may be made to the 10 as described heretofore, without departing from the field and scope of the present invention.

For example, it comes within the field of the present invention to provide that the capacitive sensor 21 is replaced by any other type of proximity transducer, for example of the inductive, magnetic, igroscopic or ultrasound type, or a load cell or other, able to detect the presence of the dough 11 while remaining in a distinct and separate ambient from where the dough 11 is, sending a corresponding electric signal to the control unit 22.

It is also clear that, although the present invention has been described with reference to specific examples, a person of skill in the art shall certainly be able to achieve many other equivalent forms of machine and method for working dough, having the characteristics as set forth in the claims and hence all coming within the field of protection defined thereby.

## Claims

1. Machine for working dough (11), comprising at least a work chamber (13) in which at least a pair of rollers (15, 16) are provided, motorized by relative motor members, and disposed substantially parallelly adjacent, so as to define between them an aperture (20) through which said dough (11) is fed, and a feed member comprising a loading chute (19) disposed at least partly inside the work chamber (13), upstream of said pair of rollers (15, 16) and able to feed said dough (11) in cooperation with said rollers (15, 16), **characterised in that** it also comprises proximity transducer members (21, 22), with indirect detection, the proximity transducer members comprising at least one sensor (21) of the capacitive type disposed in a protected position outside said work chamber (13), mounted on a surface opposite that where the dough (11) slides on said loading chute (19) and electronically connected to said motor members, and able to detect indirectly the presence or passage of said dough (11) in correspondence with said feed member (19) and to command, according to said detection, the selective activation of said motor members.

2. Machine as in claim 1, **characterized in that** said transducer means also comprise a control unit (22), connected to said sensor (21) and to said motor members, and able to command, according to the signal detected by said sensor (21), the drive of said motor members.

3. Machine as in claim 2, **characterized in that** said sensor (21) is able to detect the variation in electric capacity so as to identify the dough (11).

4. Machine as in any claim hereinbefore, **characterized in that** it comprises a timer member connected to said motor members and able to regulate the duration of activation of said motor members.

5. Machine as in any claim from 1 to 3, **characterized in that** it comprises a second transducer member associated with said rollers (15, 16) and able to detect the end of working of the dough (11), so as to command the de-activation of said motor members.

6. Machine as in any claim hereinbefore, **characterized in that** said rollers (15, 16) are able to be selectively moved relatively closer to/away from each other, according to the thickness of the dough (11) to be obtained.

7. Machine as in any claim hereinbefore, **characterized in that** it comprises counting means associated at least with said proximity transducer means (21, 22) of the capacitive type so as to count the doughs (11) worked by said machine.

8. Method for working dough (11), by means of a machine comprising at least a work chamber (13) in which at least a pair of rollers (15, 16) are provided, motorized by relative motor members, and disposed substantially parallelly adjacent, so as to define between them an aperture (20), and a feed member comprising a loading chute (19) disposed at least partly inside the work chamber (13), upstream of said pair of rollers (15, 16), said method comprising at least a feeding step in which through said feed member (19) said dough (11) is fed in cooperation with said rollers (15, 16), the feeding step comprising at least a first detection substep, **characterized in that** in said first detection substep, by means of proximity transducer means (21, 22), comprising at least one sensor (21) of the capacitive type, with indirect detection, disposed in a protected position outside said work chamber (13), mounted on a surface opposite that where the dough (11) slides on said loading chute (19) and electronically connected to said motor members, the presence or passage of said dough (11) in correspondence with said feed member (19) is indirectly detected; and a second substep in which, according to said detection, said proximity transducer means (21, 22) command the selective activation of said motor members.

## Patentansprüche

1. Maschine zur Bearbeitung von Teig (11) die mindestens eine Arbeitskammer (13) beinhaltet, in der mindestens ein Paar Rollen (15, 16) vorgesehen sind, die durch relative Bewegungselemente angetrieben und im Wesentlichen benachbart und parallel zueinander angeordnet sind, um zwischen ihnen eine Öffnung (20) zu definieren durch die der besagte Teig (11) eingezogen wird, und ein Zuführelement, das eine Beladerutsche (19) beinhaltet, die zumindest teilweise innerhalb der Arbeitskammer (13) stromaufwärts des besagten Paars Rollen (15, 16) angeordnet ist, und dazu in der Lage ist den besagten Teig (11) in Zusammenarbeit mit den besagten Rollen (15, 16) zuzuführen, **dadurch gekennzeichnet, dass** sie auch Näherungsschalterelemente (21, 22) mit indirekter Detektion beinhaltet, wobei die Näherungsschalterelemente mindestens einen kapazitiven Sensor (21) beinhalten, der in einer geschützten Position außerhalb der Arbeitskammer (13) angeordnet und an einer Oberfläche montiert ist die derjenigen gegenüberliegt, an der der Teig (11) auf besagter Beladerutsche (19) rutscht und der elektronisch an besagte Bewegungselemente angeschlossen ist, und der in der Lage ist, das Vorhandensein oder den Durchgang des besagten Teigs (11) in Verbindung mit dem besagtem Zuführelement (19) indirekt zu detektieren und entsprechend dieser Detektion die besagten Bewegungselemente selektiv zu aktivieren.

2. Maschine nach Anspruch 1, **dadurch gekennzeichnet, dass** die besagten Schalterelemente auch eine Kontrolleinheit (22) beinhalten, die mit dem besagten Sensor (21) und den besagten Bewegungselementen verbunden ist und die dazu in der Lage ist den Antrieb der Bewegungselemente entsprechend des von dem besagten Sensor (21) detektierten Signals zu steuern.

3. Maschine nach Anspruch 2, **dadurch gekennzeichnet, dass** der besagte Sensor (21) dazu in der Lage ist die Variation in der elektrischen Kapazität zu identifizieren, um den Teig (11) zu identifizieren.

4. Maschine nach einem der vorhergehenden Ansprüche, **dadurch gekennzeichnet, dass** sie ein Zeitgeberelement beinhaltet, das mit den Bewegungselementen verbunden und dazu in der Lage ist, die Dauer der Aktivierung der Bewegungselemente zu regeln.

5. Maschine nach einem der Ansprüche 1 bis 3, **dadurch gekennzeichnet, dass** sie ein zweites Schalterelement beinhaltet, das mit den Rollen (15, 16) assoziiert und in der Lage ist, das Ende der Bearbeitung des Teigs (11) zu detektieren, um die Deaktivierung der Bewegungselemente zu befehlen.

6. Maschine nach einem der vorhergehenden Ansprüche, **dadurch gekennzeichnet, dass** die besagten Rollen (15, 16) dazu in der Lage sind selektiv relativ näher zueinander/weiterweg voneinander bewegt zu werden, entsprechend der zu erzielenden Dicke des Teigs (11).

7. Maschine nach einem der vorhergehenden Ansprüche, **dadurch gekennzeichnet, dass** sie Zählmittel beinhaltet die mit dem wenigstens einen Näherungsschalterelement (21, 22) des kapazitiven Typs assoziiert sind, um die von der Maschine bearbeiteten Teige (11) zu zählen.

8. Verfahren zur Bearbeitung von Teig (11) mittels einer Maschine, die mindestens eine Arbeitskammer (13) beinhaltet, in der mindestens ein Paar Rollen (15, 16) vorgesehen sind, die durch relative Bewegungselemente angetrieben sind, die im Wesentlichen benachbart und parallel zueinander angeordnet sind, um zwischen ihnen eine Öffnung (20) zu definieren, und ein Zuführelement, das eine Beladerutsche (19) beinhaltet, die zumindest teilweise innerhalb der Arbeitskammer (13) stromaufwärts des besagten Paars Rollen (15, 16) angeordnet ist, wobei das besagte Verfahren wenigstens einen Zuführschritt beinhaltet in welchem der besagte Teig (11) durch das Zuführelement (19) in Zusammenarbeit mit den besagten Rollen (15, 16) zugeführt wird, wobei der Zuführschritt wenigstens einen ersten Detektions-Teilschritt beinhaltet, **dadurch gekennzeichnet, dass** in dem besagten ersten Detektions-Teilschritt mittels der Näherungsschalterelemente (21, 22), die mindestens einen kapazitiven Sensor (21) beinhalten, der in einer geschützten Position außerhalb der Arbeitskammer (13) angeordnet und an einer Oberfläche montiert ist die derjenigen gegenüberliegt, an der der Teig (11) auf besagter Beladerutsche (19) rutscht, und der elektronisch an besagte Bewegungselemente angeschlossen ist, das Vorhandensein oder der Durchgang des besagten Teigs (11) in Verbindung mit dem besagtem Zuführelement (19) indirekt detektiert wird und ein zweiter Teilschritt in dem, entsprechend dieser Detektion, die besagten Näherungsschalterelemente (21, 22) die selektive Aktivierung der besagten Bewegungselemente selektiv befehlen.

## Revendications

1. Machine pour travailler la pâte (11), comprenant au moins une chambre de travail (13) dans laquelle au moins une paire de rouleaux (15, 16) sont prévus, entraînés par des organes motorisés respectifs et disposés de manière adjacente sensiblement parallèlement, de manière à créer entre eux une ouverture (20) à travers laquelle ladite pâte (11) est introduite, et un organe d'alimentation comprenant un bec de chargement (19) disposé au moins partiellement à l'intérieur de la chambre de travail (13), en amont de ladite paire de rouleaux (15, 16), **caractérisée en ce qu'**elle comprend également des organes transducteurs de proximité (21, 22) à détection indirecte, ces organes transducteurs de proximité comprenant au moins un détecteur (21) du type capacitif disposé dans un emplacement protégé à l'extérieur de ladite chambre de travail (13), monté sur une surface opposée à celle où la pâte (11) coulisse sur ledit bec de chargement (19) et connecté électroniquement auxdits organes motorisés et apte à détecter indirectement la présence ou le passage de ladite pâte (11) en correspondance avec ledit organe d'alimentation (19) et à commander, en fonction de ladite détection, l'activation sélective desdits organes motorisés.

2. Machine selon la revendication 1, **caractérisée en ce que** lesdits moyens transducteurs comprennent également une unité de commande (22), connectée audit détecteur (21) et auxdits organes motorisés, et apte à commander, en fonction du signal détecté par ledit détecteur (21), l'entraînement desdits organes motorisés.

3. Machine selon la revendication 2, **caractérisée en ce que** ledit détecteur (21) est apte à détecter la variation de la capacité électrique de manière à identifier la pâte (11).

4. Machine selon l'une quelconque des revendications précédentes, **caractérisée en ce qu'**elle comprend un organe de minutage connecté auxdits organes motorisés et apte à régler la durée de l'activation desdits organes motorisés.

5. Machine selon l'une quelconque des revendications 1 à 3, **caractérisée en ce qu'**elle comprend un second organe transducteur associé auxdits rouleaux (15, 16) et apte à détecter la fin du travail de la pâte (11), de manière à commander la désactivation desdits organes motorisés.

6. Machine selon l'une quelconque des revendications précédentes, **caractérisée en ce que** lesdits rouleaux (15, 16) sont aptes à être sélectivement rapprochés/éloignés l'un de l'autre, selon l'épaisseur de la pâte (11) à obtenir.

7. Machine selon l'une quelconque des revendications précédentes, **caractérisée en ce qu'**elle comprend des moyens de comptage associés au moins avec lesdits moyens transducteurs de proximité (21, 22) du type capacitif de manière à compter les pâtes (11) travaillées par ladite machine.

8. Procédé de travail d'une pâte (11), au moins d'une machine comprenant au moins une chambre de travail (13) dans laquelle au moins une paire de rouleaux (15, 16) sont prévus, entraînés par des organes motorisés respectifs, et disposés de manière adjacente sensiblement parallèlement, de manière à créer entre eux une ouverture (20), et un organe d'alimentation comprenant un bec de chargement (19) disposé au moins partiellement à l'intérieur de la chambre de travail (13), en amont de ladite paire de rouleaux (15, 16), ledit procédé comprenant au moins une étape d'alimentation dans laquelle, à travers ledit organe d'alimentation (19), ladite pâte (11) est introduite en coopération avec lesdits rouleaux (15, 16), l'étape d'alimentation comprenant au moins une première sous-étape de détection, **caractérisé en ce que** dans ladite première sous-étape de détection, à l'aide de moyens transducteurs de proximité (21, 22), comprenant au moins un détecteur (21) du type capacitif à détection indirecte, disposé dans un emplacement protégé à l'extérieur de ladite chambre de travail (13), monté sur une surface opposée à celle où la pâte (11) coulisse sur ledit bec de chargement (19) et connecté électroniquement auxdits organes motorisés, la présence ou le passage de ladite pâte (11) en correspondance avec ledit organe d'alimentation (19) est détectée indirectement ; et une seconde sous-étape dans laquelle, en fonction de ladite détection, lesdits moyens transducteurs de proximité (21, 22) commandent l'activation sélective desdits organes motorisés.
